# EUROPEAN PATENT SPECIFICATION

(11) **EP 1 749 435 B1**
(45) Date of publication and mention of the grant of the patent: **06.12.2017**
(21) Application number: 06386023.3
(22) Date of filing: 11.07.2006
(51) Int. Cl.: A01D 46/26, A01D 46/253

(54) **Olive trees beating machine for olive crop collection**
Olivenbäumenschüttler
Dispositif pour secouer des oliviers

(30) Priority: 27.07.2005 GR 2005100389
(43) Date of publication of application: 07.02.2007
(73) Proprietor: A.A. Rabalakos O.B.E.E., 73100 Chania (GR)
(72) Inventor: Rabalakos, Anastasios, 73100 Chania (GR); Rabalakos, Andreas, 73100 Chania (GR)

(56) References cited:
- WO-A1-03/030625
- GR-B- 1 003 079
- GR-B1- 1 003 392
- GR-B1- 1 003 557

## Description

The present invention refers to a new type of beating machine for olive trees, for the collection of olive crop.

Olive crop collection is one of the most time-consuming and delicate works, which must be accomplished by the cultivators.

This collection constitutes a great percentage of the expenses, which form the final cost of the olive-trees products. The olive collection work is restricted within a relatively small time period, resulting in that it is depending on the availability of human hands.

The mechanization efforts have helped the harvest. There are machines for collecting the naturally falling olives from the trees or after the mechanical shaking of the trees. There are devices stripping the branches of the olive-trees, and also pneumatic vibrators with a hand held bar. These different vibrator types gave some hopes for the economic solution of the problem. Especially in our country due to the physiology of the olive-tree, but also to the morphology of the olive groves, the problem is very grave.

The several beating machines produced to-date present the drawback of the round drum, without combs, but only with needles, and in order to force the olives to drop, the round drum has to rotate at great speed, resulting in a strong shake of the olive-tree from the needles and in injuring the thin growth without achieving satisfactory results.

Furthermore from the bibliography the GR 1003079B (RAMPALAKOS KONSTANTINOU IOANNI) is known and it discloses an olive tree beating machine for olive crop collection, constituted of a motor and of a hollow bar through which a flexible, movement transmission (3) mechanism rotates a head (4,5,6), so as the beating machine to convert the rotational motion of a bar bearer (5) into an oscillation motion of the flexible bars (6) for the collection of the olive crop. Moreover, GR 1 003 392 B1 (KYRIAKAKIS EFSTRATIOU IOANNIS) discloses a similar machine, which comprises of a hollow bar 1, a bar bearer 7 for the transmission of movement to flexible bars 9.

In spite the existence of many machines and devices for the olive harvest, there exist several drawbacks, e.g. in the vibrator type machine the tractor is especially slow-moving, so that it provokes damages in trees, as it moves from one to the other tree.

The smaller devices are not generally usable, mainly the comb type, because they cause engagement and uprooting of pedicles and foliage, resulting in damage of the tree and crushing of the crop.

This problem led to the search of a technical solution, so that the beating machine covers a great branch surface, and avoids the injuries of the trees while a greater efficiency is obtained.

An object of the present invention is to offer for use an olive-tree beating machine for collecting of the olive crop based on the principle of rotation and oscillation comprising the features of claim 1. This movement is achieved with the help of a special boss.

The rotating shaft of the beating system passes through the boss under a 20° angle, with a possibility of choosing a bigger or smaller angle. With the boss, a conversion of the circular movement of the bars into their oscillation is possible. The circular movement of the bars is in reverse relation to their oscillating movement at their contact with the branches of the trees. In case of zero circular movement of the bars, their motion is converted into their oscillation. The beating systern comprises a motor and a hollow hand held bar, and the movement is transmitted from the motor to the rotating head.

The main advantages of the beating system are that we have a simple construction, with low forming cost, easy handling, light weight and convenient for the operator, with high productivity. Other important advantages are the minimization of the injury of the olive-tree buds, the good cooperation with any rotation creating device, and the very small operation energy needed. An object of this invention is to face problems of strength, functional ability and active duration.

The above and other characteristics and advantages of the present invention will become obvious at the following analytic description. The invention will be better understood by referring to the figures attached herewith, which picture an embodiment of the invention.
Fig.1 is a schematic view of the head of the beating machine with the beating mechanism in vertical arrangement.
Fig.2 is a schematic view of the head of the beating machine with the beating mechanism in horizontal arrangement.

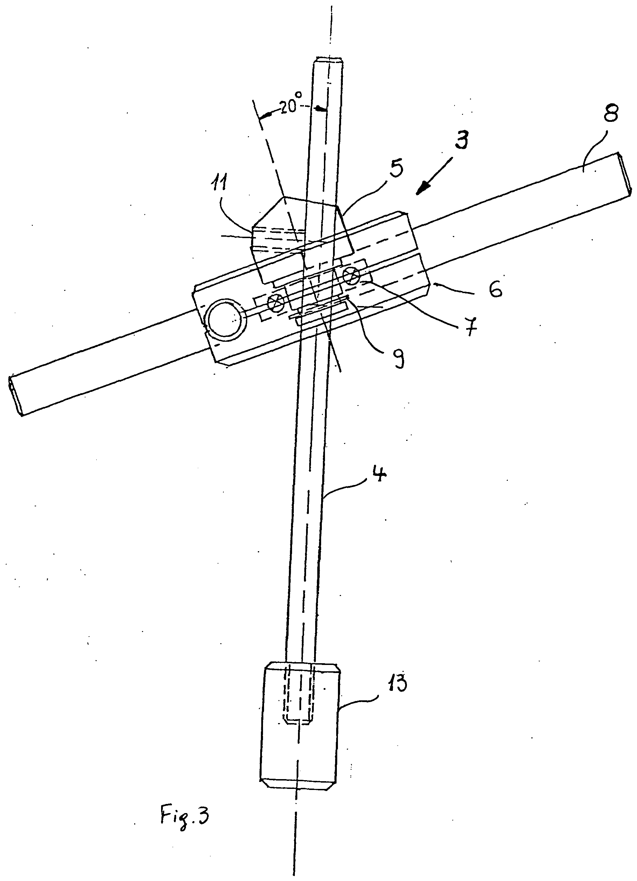

Fig.3 is a schematic view of the olive crop beating machine comprising the boss, the bar bearer and the shock elements mounted on the rotating shaft.

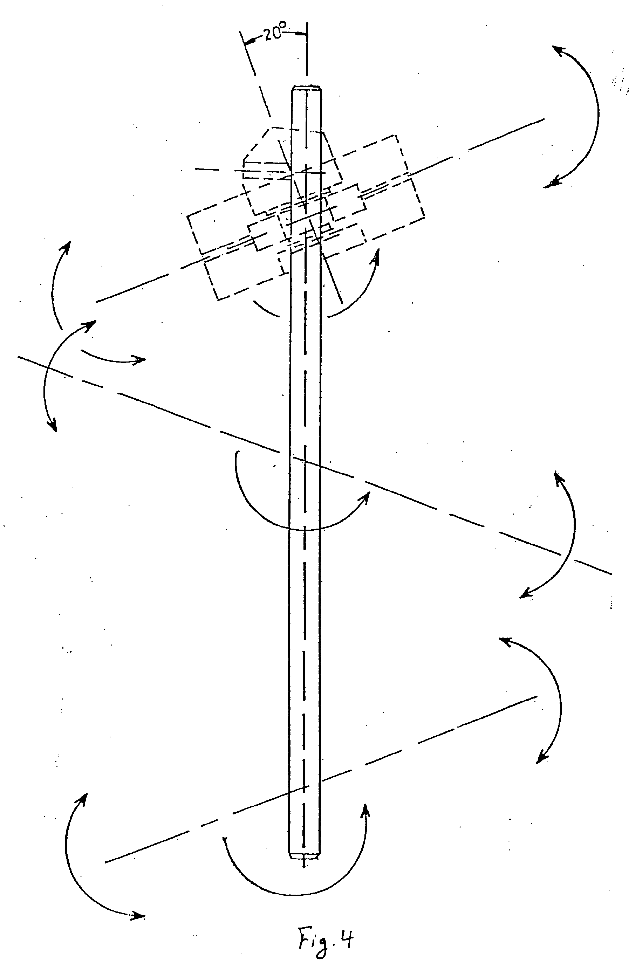

Fig.4 is a cutaway view of the olive crop beating mechanism of fig.3 .
Fig.5 is a cutaway view of the bar bearer of the olive crop beating mechanism.
Fig.6 is the plan view of the bar bearer of the olive crop beating mechanism.

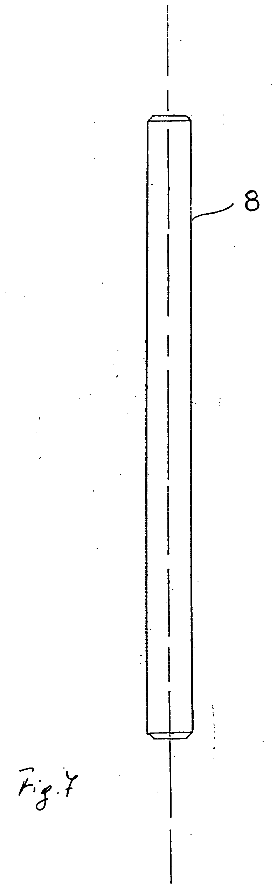

Fig.7 is a representation of the flexible bar of the olive trees beating machine.

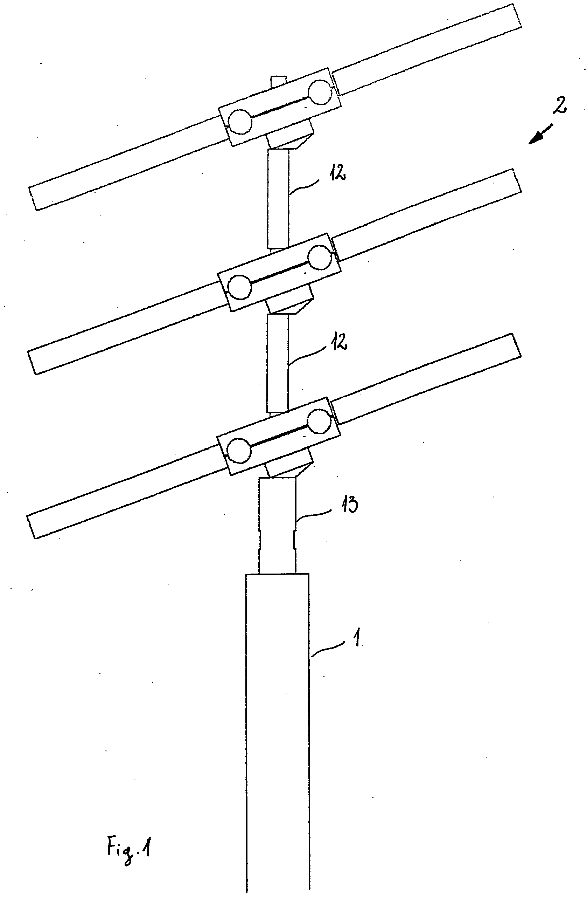

Referring now to the figures attached herewith, we will describe a preferable embodiment of the invention. The beating machine comprises the motor and the hollow bar (1), hand held by the user. It has inside it a flexible mechanism by which the motion is transmitted from the motor to the rotating head (2) situated in the far end of the bar (see Fig.1) through a coupler (13).

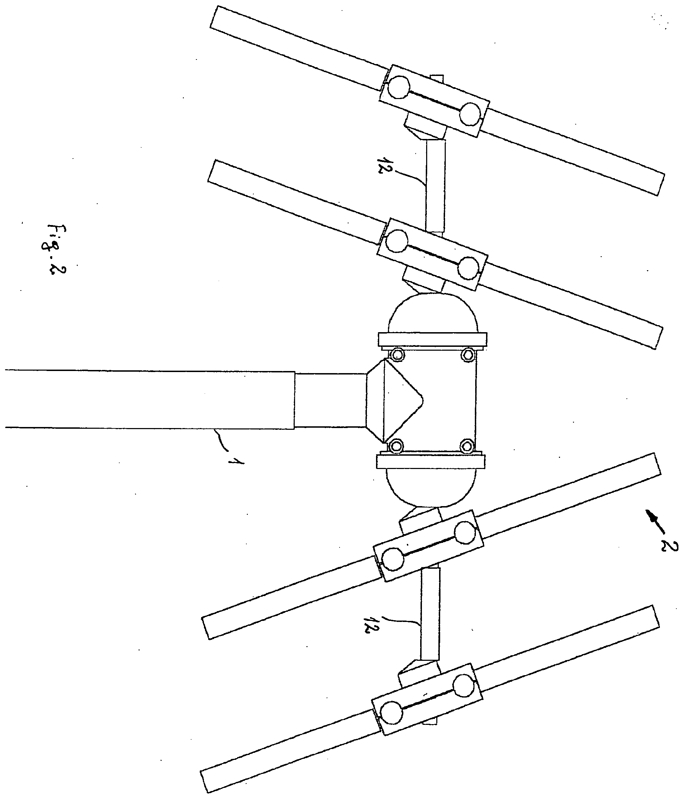

As seen in Fig.1 and Fig.2, the rotating head (2) is formed by the beating mechanisms (3) which are securely placed on the rotating shaft (4) and in a predetermined distance from each other.

The olive crop beating mechanism is composed of the wedge shaped boss (5). The rotating shaft of the boss is diagonal in relation to its symmetry axis. The rotating shaft (4) of the beating mechanism passes through the base opening of the wedge-shaped boss and intercepts the symmetry axis of the boss at the half of its height ending diagonally opposite the head of the boss. The angle formed between the rotating shaft and the symmetry axis of the boss is 20° but this is not restrictive because this angle can be changed increasing or decreasing.

The wedge shaped boss (5) is cooperating with the bar bearer (6) within which the ball-bearing (7) and the flexible bars (8) are adjusted. The ball-bearing is incorporated in the boss with the help of the locking catch (9).

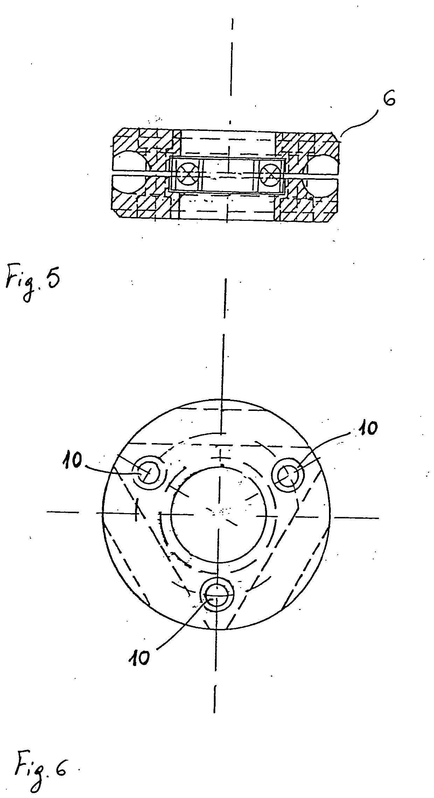

The ring shaped bar bearer (6) (see Fig.5) is formed by two similar split parts in which the wedge shaped boss (5) and the three flexible bars (8) are caged with each other at an angle of 120° to each other. The mounting of the bar bearer is achieved with the aid of three Alen screws (10).

The flexible bars (8) are made of a flexible and elastic material so that they will beat the branches separating the olives but avoiding to hurt the trees.

The mounting of the beating mechanisms (3) on the rotational shaft is achieved with the help of an Alan screw passing through the body of the boss (11).

On the head (2) and between the beating mechanisms pipe shaped elements (12) of plastic or of any other appropriate material are freely and co-axially accommodated on the rotating shaft.

The olive crop beating mechanism achieves the beating by the oscillation of the flexible bars, converting at the contact with the tree branches the rotational movement of the bar bearer in an oscillational movement of the flexible bars with the help of the wedge shaped boss. As a result the olive crop is collected within a small circular area around the tree and is not spread out in a great distance, at the same time reducing in a great degree the necessary personnel for its collection. Placing on the rotating shaft (4) more than one beating mechanisms (3) can increase the productivity of the beating machine.

It should be noted that the arrangement of the head can also be horizontal and not only vertical (Fig.2), the motion being given through angled (conical) gear.

It should here be noted that the above description of the invention has been made by referring to one only indicative example depicted in the here attached figures. Any alteration or modification concerning shapes, size, dimensions, materials used and accessories, which do not constitute a new inventive step are considered to be included in the scope and objects of the present invention, the characteristics of which being summarized in the appended claim.

## Claims

1. Olive trees beating machine for olive crop collection, constituted of a motor and of a hollow bar (1) hand held by the user, through which a flexible, rotating shaft (4) passes from the motor to a rotating head (2), of olive crop beating mechanisms (3), wherein the olive crop beating mechanisms (3) achieve the beating with the help of flexible bars' (8) oscillation, converting at the contact with the tree branches the rotational motion of a bar bearer (6) into an oscillation motion of the flexible bars (8) through a wedge formed boss (5), resulting in the collection of the olive crop within a small radius without hurting the tree, **characterized in that** on the rotating head (2) and between the olive crop beating mechanisms (3) tubular elements (12) made of plastic material are freely and co-axially accommodated on the rotating shaft (4).

## Patentansprüche

1. Olivenbaum-Schlagmaschine zur Oliven Sammlung, bestehend aus einem Motor und einer vom Benutzer in der Hand gehaltenen Hohlstange (1), durch die eine flexible Drehwelle (4) vom dem Motor zu einem rotierende Kopf (2) von Olivenbaum Schlagvorrichtungen (3) gelangt, wobei die Schlagvorrichtungen (3) das Schlagen mit Hilfe von flexiblen Stangen (8) bewirken, umwandeln beim Kontakt mit dem Baum die Drehbewegung eines Stangeträgers (6) in eine oszillierende Bewegung der flexiblen Stangen (8) durch einen keilförmigen Vorsprung (5), was zum Sammeln der Oliven innerhalb eines kleinen Bereich führt, ohne den Baum zu verletzen, **dadurch gekennzeichnet, dass** am rotierenden Kopf (2) und zwischen den Schlagvorrichtungen (3) rohrförmige Elemente (12) aus Kunststoff sind frei und koaxial auf der rotierenden Welle (4) untergebracht.

## Revendications

1. Machine à battre les oliviers pour la collecte des olives, constituée d'un moteur et d'une barre creuse (1) tenue à la main par l'utilisateur, à travers laquelle un arbre rotatif flexible (4) passe du moteur à une tête rotative (2) des mécanismes de battage des oliviers (3), où les mécanismes de battage (3) accomplissent le battement à l'aide de barres flexibles (8) oscillantes, convertissant au contact avec les branches de l'arbre le mouvement rotatif d'un support de barre (6) en un mouvement oscillant des barres flexibles (8) à travers un bossage en forme de cale (5) résultant à la collecte des olives dans une petite zone sans blesser l'arbre, **caractérisé en ce que** sur la tête rotative (2) et entre les mécanismes de battage des oliviers (3), des éléments tubulaires (12) en matière plastique sont logés librement et coaxialement sur l'arbre rotatif (4).
